# FASCICULE DE BREVET EUROPEEN

(11) **EP 4 279 378 B1**
(45) Date de publication et mention de la délivrance du brevet: **27.08.2025**
(21) Numéro de dépôt: 23172841.1
(22) Date de dépôt: 11.05.2023
(51) Int. Cl.: B64C 25/16

(54) **ENSEMBLE DE TRAPPES POUR UNE CASE DE TRAIN AVANT D'AERONEF COMPRENANT DES TRAPPES AVANT POURVUES DE DEFLECTEURS**
KLAPPENANORDNUNG FÜR EINEN FLUGZEUGBUGFAHRWERKSGEHÄUSE MIT FRONTKLAPPEN MIT DEFLEKTOREN.
SET OF FLAPS FOR AN AIRCRAFT FRONT LANDING GEAR WELL COMPRISING FRONT FLAPS PROVIDED WITH DEFLECTORS.

(30) Priorité: 16.05.2022 FR 2204599
(43) Date de publication de la demande: 22.11.2023
(73) Titulaire: Airbus Operations, 31060 Toulouse (FR)
(72) Inventeur: ANTYPAS, Jérôme, 31060 TOULOUSE (FR)
(74) Mandataire: Cabinet Le Guen Maillet

(56) Documents cités:
- EP-A1- 1 588 938
- FR-A1- 2 918 635
- FR-A1- 3 039 131

## Description

### Domaine technique

La présente invention concerne un ensemble de trappes pour une case de train avant d'un aéronef, ainsi qu'une case de train avant comportant un tel ensemble de trappes, et un aéronef comportant une telle case de train avant.

### Etat de la technique

On sait que le roulage d'un aéronef, en particulier d'un avion de transport, est réalisé au moyen de trains d'atterrissage avant et arrière, escamotables dans le fuselage dudit aéronef. En particulier, le train d'atterrissage avant peut être replié dans une case de train avant lorsque l'aéronef est en vol. A cet effet, la case de train avant comporte un ensemble de trappes configuré pour ouvrir ou fermer cette dernière afin de permettre le déploiement ou l'escamotage du train d'atterrissage avant.

Sur certains aéronefs, la case de train avant comporte quatre trappes, deux trappes dites avant situées vers le nez de l'aéronef et deux trappes dites arrière situées juste derrière les trappes avant. Ces trappes avant et arrière sont généralement conçues de sorte que, lors d'un décollage ou d'un atterrissage, la paire de trappes avant et la paire de trappes arrière s'ouvrent ou se ferment l'une après l'autre. Aussi, il apparaît un intervalle de temps, généralement de quelques secondes, durant lequel les trappes avant sont ouvertes alors que les trappes arrière sont fermées.

Cette configuration particulière peut générer un phénomène vibratoire au niveau de la case de train avant, autour de 20 Hz. Ce phénomène vibratoire, bien que transitoire car n'apparaissant que durant un court intervalle de temps, peut entraîner un inconfort pour les passagers, ainsi que des efforts dynamiques non souhaités dans les mécanismes d'ouverture/fermeture des trappes avant de l'aéronef. Il pourrait donc être intéressant de trouver une solution pour réduire ce phénomène vibratoire transitoire.

Le document EP 1 588 938 A1 divulgue un aéronef avec un train d'atterrissage de l'état de la technique.

### Exposé de l'invention

La présente invention a pour objet de proposer une solution pour atténuer le phénomène vibratoire transitoire précité. Elle concerne un ensemble de trappes pour une case de train avant d'un aéronef comportant deux trappes avant et deux trappes arrière destinées à ouvrir et fermer la case de train avant pour permettre le déploiement ou l'escamotage d'un train d'atterrissage.

Selon l'invention, chacune desdites trappes avant est pourvue d'au moins un déflecteur agencé sur une face interne de la trappe avant à proximité d'un bord d'attaque arrière de cette dernière, ledit déflecteur s'étendant au moins partiellement le long dudit bord d'attaque arrière.

Ainsi, grâce aux déflecteurs des trappes avant, on dispose d'une solution permettant d'agir sur un flux aérodynamique s'écoulant entre lesdites trappes avant lorsque celles-ci sont ouvertes. Plus particulièrement, cette solution permet d'agir sur ledit flux aérodynamique de manière à atténuer significativement des phénomènes vibratoires indésirables pouvant apparaître dans la configuration particulière dans laquelle les trappes avant sont ouvertes et les trappes arrière sont fermées.

Avantageusement, chacun desdits déflecteurs est agencé, sur la face interne de la trappe avant correspondante, à une distance de son bord d'attaque arrière qui est inférieure à 20% d'une longueur totale de ladite trappe avant.

En outre, de façon avantageuse, chacun desdits déflecteurs comporte une plaque pourvue d'une surface déflectrice.

Dans un mode de réalisation particulier, la plaque de chacun desdits déflecteurs présente une longueur comprise entre 30% et 50% d'une largeur de la trappe avant sur laquelle ledit déflecteur est agencé.

De plus, de façon avantageuse, la plaque de chacun desdits déflecteurs présente une hauteur comprise entre 50 mm et 150 mm.

En outre, avantageusement, la plaque de chacun desdits déflecteurs présente une forme sensiblement plane et forme un angle avec une direction orthogonale à la face interne de la trappe avant sur laquelle ledit déflecteur est agencé, ledit angle étant compris dans un domaine angulaire défini entre 0° et 5°, tel que :
- 0° correspond à une position dans laquelle ladite plaque est parallèle à la direction orthogonale ; et
- 5° correspond à une position dans laquelle ladite plaque est inclinée vers le bord d'attaque arrière de la trappe avant en formant un angle de 5° avec ladite direction orthogonale.

Par ailleurs, dans un mode de réalisation particulier, chacun desdits déflecteurs comporte une pluralité de pattes de fixation, chacune desdites pattes de fixation étant apte à être fixée sur la face interne de la trappe avant sur laquelle ledit déflecteur est agencé.

En outre, avantageusement, chacun desdits déflecteurs est fixé sur la trappe avant par l'intermédiaire d'au moins l'un des éléments de fixation suivants : rivet, vis, boulon, colle.

La présente invention concerne également une case de train avant pour un aéronef, ladite case de train avant comportant une cavité apte à recevoir un train d'atterrissage, une ouverture configurée pour permettre le passage dudit train d'atterrissage et un ensemble de trappes apte à ouvrir et fermer ladite ouverture pour permettre le déploiement ou l'escamotage dudit train d'atterrissage. Selon l'invention, l'ensemble de trappes de la case de train avant correspond à l'ensemble de trappes décrit ci-avant.

La présente invention concerne, en outre, un aéronef qui comporte une case de train avant telle que celle décrite ci-dessus.

### Brève description des figures

Les figures annexées feront bien comprendre comment l'invention peut être réalisée. Sur ces figures, des références identiques désignent des éléments semblables.
La figure 1 est une vue en perspective d'un mode de réalisation particulier d'un aéronef comportant une case de train avant munie d'un ensemble de trappes comprenant des trappes avant pourvues de déflecteurs.
La figure 2 est une vue agrandie, en perspective, de la case de train avant de l'aéronef de la figure 1.
La figure 3 est une vue en perspective d'une trappe avant de l'ensemble de trappes de l'aéronef de la figure 1, dans une position ouverte.
La figure 4 est une vue partielle, en perspective, d'une trappe avant faisant partie d'un mode de réalisation particulier d'un ensemble de trappes.
La figure 5 est une vue schématique d'un mode de réalisation particulier d'un ensemble de trappes comportant des trappes avant pourvues de déflecteurs inclinés.

### Description détaillée

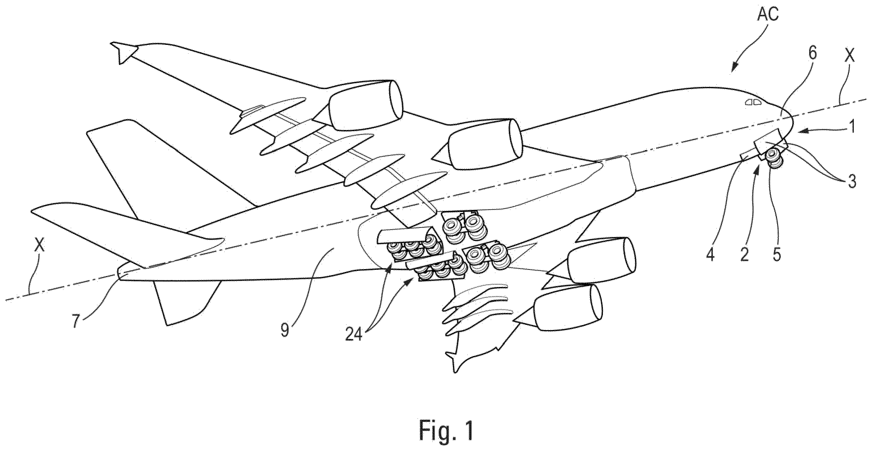

L'ensemble de trappes (ci-après ensemble 1) permettant d'illustrer l'invention et représenté dans des modes de réalisation particuliers de la figure 1 à la figure 5 est destiné à être monté sur une case de train avant 2 d'un aéronef AC, en particulier d'un avion de transport.

On entend par « ensemble de trappes », des éléments permettant d'ouvrir et de fermer la case de train avant 2 et comprenant des trappes ainsi que des moyens et organes usuels pour ouvrir ou fermer ces trappes.

Comme représenté sur la figure 1, l'aéronef AC comprend un nez 6 à l'avant et une queue 7 à l'arrière, et il est pourvu, sur une partie inférieure d'un fuselage 9, de trains d'atterrissage 24 arrière et d'un train d'atterrissage 5 avant qui sont escamotables. Les trains d'atterrissage 24 arrière sont situés au niveau d'une partie centrale de l'aéronef AC tandis que le train d'atterrissage 5 avant est situé à proximité du nez 6.

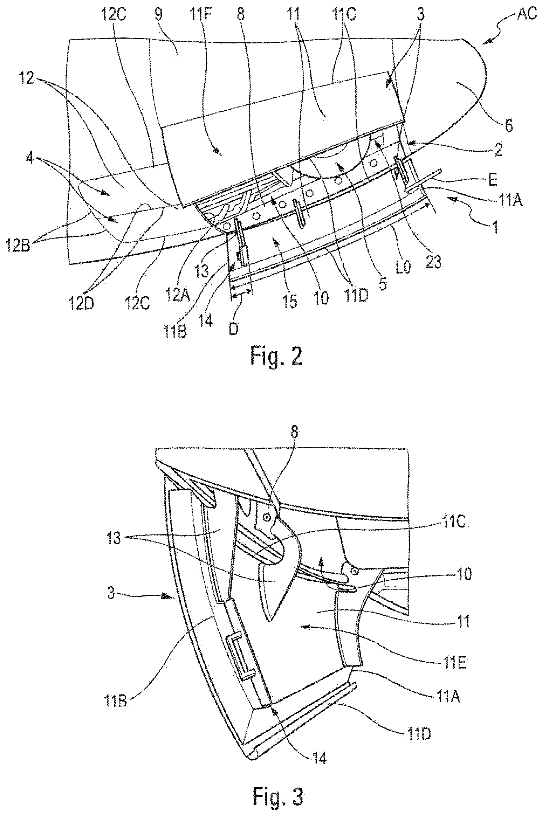

Comme représenté sur la figure 2, l'ensemble 1 comporte deux trappes avant 3 et deux trappes arrière 4 destinées à ouvrir et fermer la case de train avant 2 afin de déployer ou d'escamoter le train d'atterrissage 5 avant de l'aéronef AC. L'ensemble 1 est monté sur une structure 8 du fuselage 9 de l'aéronef AC, au niveau d'une ouverture 10 de la case de train avant 2 située sur une partie inférieure du fuselage 9. La case de train avant 2 contient notamment le train d'atterrissage 5, qui est pourvu de systèmes usuels (non représentés) permettant de le déplier (déploiement) ou de le replier (escamotage) au travers de l'ouverture 10.

Dans le cadre de la présente description, on entend :
- par « avant », ce qui est situé ou orienté vers l'avant de l'aéronef AC, c'est-à-dire vers le nez 6 ;
- par « arrière », ce qui est situé ou orienté vers l'arrière de l'aéronef, c'est-à-dire vers la queue 7 ;
- par « interne » ou « intérieur », ce qui est situé ou orienté vers l'espace de l'aéronef AC délimité par le fuselage 9 ;
- par « externe » ou « extérieur », ce qui est situé ou orienté en dehors de l'espace de l'aéronef AC délimité par le fuselage 9 ;
- par « latéral » ou « latéralement », ce qui est situé ou orienté transversalement de part et d'autre d'un plan vertical de symétrie de l'aéronef AC ;
- par « supérieur », ce qui est situé vers le dos de l'aéronef AC ; et
   - par « inférieur », ce qui est situé vers le ventre de l'aéronef AC. De plus, dans le cadre de la présente invention :
- « train d'atterrissage » désigne un ensemble comportant une jambe munie d'une ou de plusieurs roues ainsi que d'autres systèmes, par exemple des systèmes d'amortissement, des systèmes de guidage, des systèmes de freinage et/ou des systèmes d'escamotage ; et
- « case de train avant » désigne un logement situé dans la partie inférieure du fuselage 9 de l'aéronef AC à l'avant (à proximité du nez 6) et qui est destinée à recevoir le train d'atterrissage 5 avant.

Par ailleurs, comme représenté sur la figure 2, chacune des trappes avant 3 comporte un panneau 11 et chacune des trappes arrière 4 comporte un panneau 12. Les panneaux 11 et 12 présentent une forme sensiblement rectangulaire.

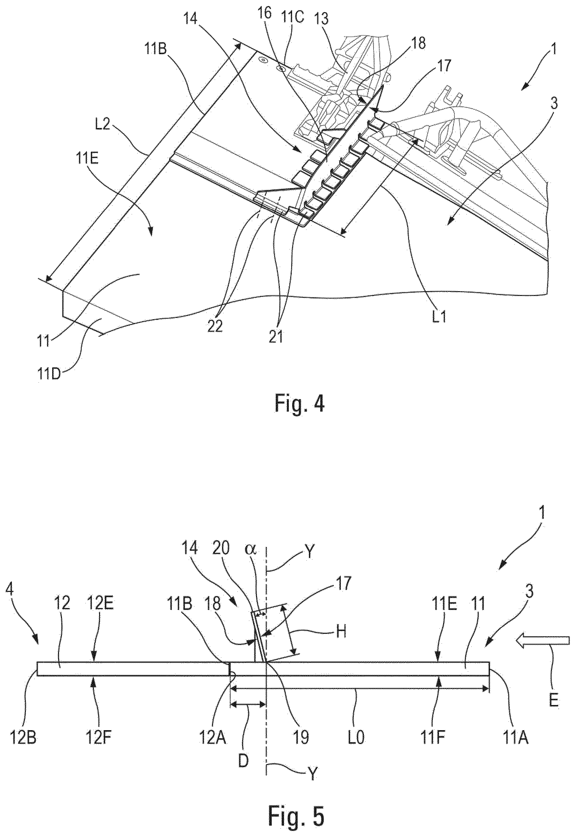

Comme représenté sur la figure 2 et la figure 5, chacun des panneaux 11 des deux trappes avant 3 comprend :
- un bord d'attaque avant 11A situé à une extrémité avant de la trappe avant 3 correspondante ;
- un bord d'attaque arrière 11B situé à une extrémité arrière de la trappe avant 3 correspondante, opposé au bord d'attaque avant 11A ;
- un bord latéral 11C situé à une extrémité latérale de la trappe avant 3 correspondante ;
- un bord latéral libre 11D situé à une extrémité latérale libre de la trappe avant 3 correspondante, opposé au bord latéral 11C ;
- une face interne 11E ; et
- une face externe 11F opposée à la face interne 11E.

De même, comme également représenté sur la figure 2 et la figure 5, chacun des panneaux 12 des deux trappes arrière 4 comprend :
- un bord d'attaque avant 12A situé à une extrémité avant de la trappe arrière 4 correspondante ;
- un bord d'attaque arrière 12B situé à une extrémité arrière de la trappe arrière 4 correspondante, opposé au bord d'attaque avant 12A ;
- un bord latéral 12C situé à une extrémité latérale de la trappe arrière 4 correspondante ;
- un bord latéral libre 12D situé à une extrémité latérale libre de la trappe arrière 4 correspondante, opposé au bord latéral 12C ;
- une face interne 12E ; et
- une face externe 12F opposée à la face interne 12E.

Dans un mode de réalisation préféré, représenté sur la figure 2, les trappes avant 3 et les trappes arrière 4 de l'ensemble 1 sont liées à la structure 8 du fuselage 9 de l'aéronef AC par l'intermédiaire d'éléments d'articulation 13. Ces éléments d'articulation 13 sont aptes à faire pivoter les trappes avant 3 et les trappes arrière 4 pour permettre l'ouverture ou la fermeture de la case de train avant 2. Ils sont fixés sur les panneaux 11 des trappes avant 3 à proximité de chacun des bords latéraux 11C, et ils sont fixés sur les panneaux 12 des trappes arrière 4 à proximité de chacun des bords latéraux 12C. L'ensemble 1 comporte également des dispositifs d'actionnement (non représentés) aptes à être commandés pour actionner l'ouverture et la fermeture des trappes avant 3 et des trappes arrière 4 de façon usuelle.

Chacune des paires de trappes est configurée pour pouvoir être amenée dans au moins deux positions différentes, à savoir une position ouverte dans laquelle les trappes ouvrent la partie de l'ouverture 10 qu'elles couvrent et une position fermée dans laquelle elles ferment ladite partie d'ouverture 10 comme précisé ci-dessous.

Dans la position fermée, les trappes sont rabattues latéralement vers le centre de l'aéronef AC, à savoir vers son plan vertical de symétrie. Pour les trappes avant 3, la position fermée correspond à une position dans laquelle les panneaux 11 sont rabattus et joints entre eux au niveau de leurs bords latéraux 11D. De même, pour les trappes arrière 4, la position fermée correspond à une position dans laquelle les panneaux 12 sont rabattus et joints entre eux au niveau de leurs bords latéraux 12D. Lorsque les trappes avant 3 et les trappes arrière 4 sont toutes dans la position fermée, leurs bords latéraux 11D et 12D forment une jonction centrale continue et linéaire qui est comprise dans le plan vertical de symétrie de l'aéronef AC.

Dans la position ouverte, les trappes sont pivotées vers l'extérieur de l'aéronef AC de manière à ouvrir l'ouverture 10. Pour les trappes avant 3, la position ouverte correspond à une position des panneaux 11 dans laquelle leurs bords latéraux 11D sont orientés vers le bas (sous l'aéronef AC) et leurs faces internes 11E sont en regard l'une de l'autre. De même, pour les trappes arrière 4, la position ouverte correspond à une position des panneaux 12 dans laquelle leurs bords latéraux 12D sont orientés vers le bas (sous l'aéronef AC) et leurs faces internes 12E sont en regard l'une de l'autre. Lorsque les trappes avant 3 et les trappes arrière 4 sont toutes dans la position ouverte, elles ouvrent l'ouverture 10 de manière à permettre le passage du train d'atterrissage 5 au travers de cette dernière.

De plus, les trappes avant 3 sont alignées avec les trappes arrière 4 dans la direction longitudinale de l'aéronef AC, illustrée par un axe longitudinal X-X sur la figure 1. Les trappes avant 3 sont directement adjacentes aux trappes arrière 4, en particulier les bords arrière 11B des trappes avant 3 sont adjacents aux bords avant 12A des trappes arrière 4.

Par ailleurs, l'ensemble 1 est configuré pour commander l'ouverture et la fermeture des trappes avant 3 et des trappes arrière 4 de manière non simultanée, à savoir à des instants différents. Ainsi, au cours de l'ouverture et de la fermeture des trappes, on rencontre une configuration particulière, représentée sur la figure 2 et précisée ci-après, dans laquelle les trappes avant 3 sont dans la position ouverte et les trappes arrière 4 sont dans la position fermée.

Par ailleurs, chacune des deux trappes avant 3 de l'ensemble 1 est pourvue d'un déflecteur 14. Ces déflecteurs 14 peuvent présenter des formes variées et être réalisés dans différents matériaux, par exemple en métal (aluminium) ou dans un matériau composite.

Chacun desdits déflecteurs 14 est agencé sur la face interne 11E à proximité du bord d'attaque arrière 11B et s'étend le long dudit bord d'attaque arrière 11B. De préférence, chacun des déflecteurs 14 s'étend parallèlement au bord d'attaque arrière 11B de la trappe avant 3 sur laquelle il est agencé. Toutefois, dans d'autres modes de réalisation, les déflecteurs 14 peuvent présenter des orientations variées par rapport au bord d'attaque arrière 11B.

Les déflecteurs 14 ainsi agencés sont aptes à agir sur un flux aérodynamique représenté par une flèche E sur la figure 2 et la figure 5, par exemple un flux d'air, s'écoulant dans un espace 15 compris entre les faces internes 11E des trappes avant 3 lorsqu'elles sont dans la position ouverte.

L'agencement des déflecteurs 14 à proximité des bords d'attaque arrière 11B permet d'obtenir un effet surprenant dans la configuration particulière de la figure 2 dans laquelle les trappes avant 3 sont dans la position ouverte et les trappe arrière 4 sont dans la position fermée. En effet, cet agencement permet aux déflecteurs 14 de perturber le flux aérodynamique entre les trappes avant 3 de manière à atténuer significativement des phénomènes vibratoires transitoires pouvant apparaître dans cette configuration particulière. Cette atténuation des phénomènes vibratoires transitoires peut représenter une diminution des vibrations de l'ordre de 30%.

Ainsi, grâce aux déflecteurs 14 des trappes avant 3, on dispose d'un ensemble 1 simple, léger et peu encombrant permettant d'atténuer significativement des phénomènes vibratoires indésirables pouvant apparaître dans la configuration particulière dans laquelle les trappes avant 3 sont ouvertes et les trappes arrière 4 sont fermées. L'ensemble 1 est notamment simple à mettre en œuvre et facilement adaptable sur tout type de trappe. En outre, il s'agit d'un ensemble passif, les déflecteurs 14 n'ayant pas besoin d'énergie ou d'être mis en mouvement pour fonctionner. De plus, l'ensemble 1 est robuste puisque les trappes avant 3 sur lesquels les déflecteurs 14 sont agencés font partie de la structure primaire de l'aéronef AC.

Par ailleurs, comme représenté sur la figure 2 et la figure 5, chacun des déflecteurs 14 est agencé sur la face interne 11E de la trappe avant 3 correspondante, à une distance D du bord d'attaque arrière 11B. De préférence, cette distance D est inférieure à 20% d'une longueur totale L0 de ladite trappe avant 3. La longueur totale L0 correspond à la longueur entre le bord d'attaque avant 11A et le bord d'attaque arrière 11B.

La distance D à laquelle les déflecteurs 14 sont agencés des bords arrière 11B des trappes avant 3 peut, notamment, permettre de faire varier la manière dont lesdits déflecteurs 14 agissent sur le flux aérodynamique s'écoulant entre lesdites trappes avant 3.

Dans un mode de réalisation particulier, représenté sur la figure 4, chacun des déflecteurs 14 comporte une plaque 16 fixée sur la trappe avant 3 correspondante orthogonalement à la face interne 11E. Chacune des plaques 16 est pourvue d'une face déflectrice 17 orientée vers le bord d'attaque avant 11A de la trappe avant 3 et d'une face arrière 18 (figure 5) orientée vers le bord d'attaque arrière 11B.

De préférence, la plaque 16 est plane, c'est-à-dire que la face déflectrice 17 et la face arrière 18 sont parallèles. Toutefois, dans des réalisations particulières, la plaque 16 peut présenter des formes variées, par exemple avec une face déflectrice 17 incurvée.

En outre, comme représenté sur la figure 5, la plaque 16 comporte un bord 19 agencé contre la face interne 11E de la trappe avant 3 et un bord 20 libre opposé au bord 19. Elle présente notamment une forme rectangulaire comprenant une longueur L1 (figure 4) et une hauteur H. La hauteur H correspond à la distance entre les bords 19 et 20. De préférence, la hauteur H est comprise entre 50 mm et 150 mm. Une telle hauteur H permet d'obtenir l'effet recherché sur l'écoulement aérodynamique entre les trappes avant 3, tout en évitant de générer une traînée importante.

Dans une réalisation particulière du mode de réalisation précédent, représentée sur la figure 4, la plaque 16 de chacun des déflecteurs 14 présente une longueur L1 s'étendant sur une partie d'une largeur L2 de la trappe avant 3 sur laquelle il est agencé. La largeur L2 correspond à la distance entre le bord latéral 11C et le bord latéral libre 11D. De préférence, la longueur L1 est comprise entre 30% et 50% de la largeur L2.

La longueur L1 et la hauteur H des plaques 16 peuvent notamment permettre de faire varier la manière dont les déflecteurs 14 agissent sur le flux aérodynamique s'écoulant entre les trappes avant 3.

Dans une autre réalisation particulière du mode de réalisation précédent, représentée schématiquement sur la figure 5, la plaque de chacun des déflecteurs 14 présente une forme sensiblement plane, est agencée le long du bord d'attaque arrière 11B et forme un angle α avec une direction orthogonale à la face interne 11E de la trappe avant 3, illustrée par un axe Y-Y.

De préférence, l'angle α est compris dans un domaine angulaire défini entre 0° et 5°. Un angle de 0° correspond à une position dans laquelle la plaque 16 est parallèle à la direction orthogonale à la face interne 11E (comme dans l'exemple de la figure 4). En outre, un angle de 5° correspond à une position dans laquelle la plaque 16 est inclinée vers le bord d'attaque arrière 11B de la trappe avant 3 en formant un angle de 5° avec la direction (axe Y-Y) orthogonale à la face interne 11E, comme représenté sur la figure 5.

L'inclinaison des plaques 16 peut, notamment, permettre de faire varier la manière dont les déflecteurs 14 agissent sur le flux aérodynamique s'écoulant entre les trappes avant 3.

Par ailleurs, comme représenté sur la figure 4, dans un mode de réalisation particulier, chacun des déflecteurs 14 comporte une pluralité de pattes de fixation 21 permettant de fixer ledit déflecteur 14 sur la trappe avant 3 correspondante. Les pattes de fixation 21 présentent deux formes différentes. Certaines pattes de fixation 21 présentent une forme de languette s'étendant de part et d'autre du déflecteur 14 au niveau du bord 19. Ces languettes sont plaquées sur la face interne 11E de la trappe avant 3. D'autres pattes de fixation 21 présentent une forme d'équerre s'étendant entre la face arrière 18 du déflecteur 14 et la face interne 11E de la trappe avant 3. Ces pattes de fixation 21 peuvent présenter des formes variées pouvant faciliter l'agencement des déflecteurs 14 sur les trappes avant 3.

En outre, chacun des déflecteurs 14 est fixé sur la trappe avant 3 correspondante par l'intermédiaire d'éléments de fixation 22 usuels. Ces éléments de fixation 22, représentés schématiquement sur la figure 4, peuvent correspondre à des rivets, des vis, des boulons ou à de la colle.

Comme indiqué ci-dessus, l'ensemble 1 est configuré pour ouvrir ou fermer l'ouverture 10 de cette dernière pour déployer ou escamoter le train d'atterrissage 5 avant lors d'un atterrissage ou d'un décollage de l'aéronef AC.

Lors d'un décollage, les trappes avant 3 et les trappes arrière 4 sont dans la position ouverte. Le train d'atterrissage 5 est déplié et permet le roulage de l'aéronef AC au sol. Lorsque l'aéronef AC a quitté le sol, le train d'atterrissage 5 est replié et escamoté dans la cavité 23 par un mécanisme d'actionnement approprié (non représenté). Ce mécanisme d'actionnement est couplé aux trappes arrière 4 de manière à les entraîner dans la position fermée en même temps que l'escamotage du train d'atterrissage 5. Lorsque que le train d'atterrissage 5 est replié et que les trappes arrière 4 sont fermées, ou pendant leur fermeture, l'ensemble 1 est configuré pour actionner la fermeture des trappes avant 3. Lorsque les trappes avant 3 sont amenées dans la position fermée, la case de train avant 2 est fermée.

En outre, lors d'un atterrissage, les trappes avant 3 et les trappes arrière 4 sont, tout d'abord, dans la position fermée et le train d'atterrissage 5 est replié dans la case de train avant 2. L'ensemble 1 est ensuite configuré pour ouvrir l'ouverture 10 de la case de train avant 2 en actionnant, dans un premier temps, uniquement l'ouverture des trappes avant 3 tandis que les trappes arrière 4 restent dans la position fermée. Lorsque les trappes avant 3 sont dans la position ouverte, ou pendant leur ouverture, le mécanisme d'actionnement du train d'atterrissage 5 est commandé pour déplier ce dernier. Ce mécanisme d'actionnement est couplé aux trappes arrière 4 de manière à entraîner leur ouverture en même temps que le déploiement du train d'atterrissage 5. Lorsque le train d'atterrissage 5 est déployé, toutes les trappes de l'ensemble 1 sont dans la position ouverte et l'aéronef AC peut réaliser l'atterrissage.

Lors de l'atterrissage et lors du décollage de l'aéronef AC, pendant un intervalle de temps de l'ordre de quelques secondes, généralement entre 5 et 10 secondes, l'ensemble 1 se trouve donc dans la configuration particulière dans laquelle les trappes avant 3 sont ouvertes et les trappes arrière 4 sont fermées. Comme précisé ci-avant dans la description, dans cette configuration particulière des phénomènes vibratoires peuvent apparaître au niveau de la case de train avant 2.

Ces phénomènes vibratoires sont liés à l'écoulement d'air, en particulier dans l'espace 15 compris entre les trappes avant 3 en position ouverte, qui pénètre dans la case de train avant 2 partiellement fermée par les trappes arrière 4. Ces phénomènes vibratoires sont transitoires puisqu'ils n'apparaissent que pendant cet intervalle de temps entre l'ouverture (ou la fermeture) des trappes avant 3 et l'ouverture (ou la fermeture) des trappes arrière 4.

Grâce aux déflecteurs 14 de l'ensemble 1, ces phénomènes vibratoires transitoires sont significativement atténués. En effet, les déflecteurs 14 permettent d'agir sur l'écoulement de l'air entre les trappes avant 3. Plus précisément, ils permettent de perturber ledit écoulement d'air, par exemple en empêchant une partie dudit écoulement d'air de pénétrer dans la cavité 23 de la case de train avant 2. Cela a pour effet de réduire des vibrations pouvant être générées au niveau de la case de train avant 2.

L'ensemble 1 de trappes, tel que décrit ci-dessus et destiné à être monté sur la case de train avant 2 de l'aéronef AC, présente de nombreux avantages. En particulier :
- il permet de perturber un écoulement aérodynamique s'écoulant entre les trappes avant 3 de manière à atténuer des phénomènes vibratoires transitoires au niveau de la case de train avant 2 lorsque les trappes avant 3 sont dans la position ouverte et les trappes arrière 4 sont dans la position fermée ;
- il permet d'éviter une résonance structurale de la case de train avant 2 ;
- il est de type passif, à savoir qu'il ne nécessite pas d'énergie pour fonctionner ;
- il est léger, peu encombrant et peu onéreux ;
- il est simple de conception et d'installation ;
- il peut être monté facilement sur tout type et toute forme de structure ; et
- il est agencé sur une structure primaire de l'aéronef AC.

## Revendications

1. Ensemble de trappes pour une case de train avant (2) d'un aéronef (AC), ledit ensemble (1) de trappes comportant deux trappes avant (3) et deux trappes arrière (4) destinées à ouvrir ou fermer la case de train avant (2) pour permettre le déploiement ou l'escamotage d'un train d'atterrissage (5),
**caractérisé en ce que** chacune desdites trappes avant (3) est pourvue, d'au moins un déflecteur (14) agencé sur une face interne (11E) de la trappe avant (3) à proximité d'un bord d'attaque arrière (11B) de cette dernière, ledit déflecteur (14) s'étendant au moins partiellement le long dudit bord d'attaque arrière (11B) .

2. Ensemble selon la revendication 1,
**caractérisé en ce que** chacun desdits déflecteurs (14) est agencé, sur la face interne (11E) de la trappe avant (3) correspondante, à une distance (D) de son bord d'attaque arrière (11B), qui est inférieure à 20% d'une longueur totale (L0) de ladite trappe avant (3).

3. Ensemble selon l'une des revendications 1 et 2,
**caractérisé en ce que** chacun desdits déflecteurs (14) comporte une plaque (16) pourvue d'une surface déflectrice (17).

4. Ensemble selon la revendication 3,
**caractérisé en ce que** la plaque (16) de chacun desdits déflecteurs (14) présente une longueur (L1) comprise entre 30% et 50% d'une largeur (L2) de la trappe avant (3) sur laquelle ledit déflecteur (14) est agencé.

5. Ensemble selon l'une quelconque des revendications 3 et 4,
**caractérisé en ce que** la plaque (16) de chacun desdits déflecteurs (14) présente une hauteur (H) comprise entre 50 mm et 150 mm.

6. Ensemble selon l'une quelconque des revendications 3 à 5,
**caractérisé en ce que** la plaque (16) de chacun desdits déflecteurs (14) présente une forme sensiblement plane et forme un angle (α) avec une direction orthogonale (Y-Y) à la face interne (11E) de la trappe avant (3) sur laquelle ledit déflecteur (14) est agencé, ledit angle (α) étant compris dans un domaine angulaire défini entre 0° et 5°, tel que :
- 0° correspond à une position dans laquelle ladite plaque (16) est parallèle à la direction orthogonale (Y-Y) ; et
- 5° correspond à une position dans laquelle ladite plaque (16) est inclinée vers le bord d'attaque arrière (11B) de la trappe avant (3) en formant un angle de 5° avec ladite direction orthogonale (Y-Y).

7. Ensemble selon l'une quelconque des revendications 1 à 6,
**caractérisé en ce que** chacun desdits déflecteurs (14) comporte une pluralité de pattes de fixation (21), chacune desdites pattes de fixation (21) étant apte à être fixée sur la face interne (11E) de la trappe avant (3) sur laquelle ledit déflecteur (14) est agencé.

8. Ensemble selon l'une quelconque des revendications 1 à 7,
**caractérisé en ce que** chacun desdits déflecteurs (14) est fixé sur la trappe avant (3) par l'intermédiaire d'au moins l'un des éléments de fixation (22) suivants : rivet, vis, boulon, colle.

9. Case de train avant pour un aéronef (AC), ladite case de train avant (2) comportant une cavité (23) apte à recevoir un train d'atterrissage (5), une ouverture (10) configurée pour le passage dudit train d'atterrissage (5), et un ensemble de trappes apte à ouvrir et fermer ladite ouverture (10) pour permettre le déploiement ou l'escamotage dudit train d'atterrissage (5), **caractérisée en ce que** l'ensemble de trappes est tel que l'ensemble (1) selon l'une quelconque des revendications 1 à 8.

10. Aéronef, **caractérisé en ce qu'**il comporte une case de train avant (2) selon la revendication 9.

## Patentansprüche

1. Anordnung von Klappen für ein Bugfahrwerksgehäuse (2) eines Flugzeugs (AC), wobei die Anordnung (1) von Klappen zwei vordere Klappen (3) und zwei hintere Klappen (4) umfasst, die dazu bestimmt sind, das Bugfahrwerksgehäuse (2) zu öffnen oder zu schließen, um das Ausfahren oder das Einfahren eines Fahrwerks (5) zu ermöglichen, **dadurch gekennzeichnet**, das jede der vorderen Klappen (3) mit mindestens einem Deflektor (14) versehen ist, der auf einer Innenseite (11E) der vorderen Klappe (3) in der Nähe einer hinteren Stirnkante (11B) von Letzterer angeordnet ist, wobei sich der Deflektor (14) mindestens teilweise entlang der hinteren Stirnkante (11B) erstreckt.

2. Anordnung nach Anspruch 1,
**dadurch gekennzeichnet, dass** jeder der Deflektoren (14) auf der Innenseite (11E) der entsprechenden vorderen Klappe (3) in einem Abstand (D) von seiner hinteren Stirnkante (11B) angeordnet ist, der weniger als 20 % einer Gesamtlänge (L0) der vorderen Klappe (3) beträgt.

3. Anordnung nach einem der Ansprüche 1 und 2,
**dadurch gekennzeichnet, dass** jeder der Deflektoren (14) eine Platte (16) umfasst, die mit einer abweisenden Oberfläche (17) versehen ist.

4. Anordnung nach Anspruch 3,
**dadurch gekennzeichnet, dass** die Platte (16) jedes der Deflektoren (14) eine Länge (L1) zwischen 30 % und 50 % einer Breite (L2) der vorderen Klappe (3), an welcher der Deflektor (14) angeordnet ist, aufweist.

5. Anordnung nach einem der Ansprüche 3 und 4,
**dadurch gekennzeichnet, dass** die Platte (16) jedes der Deflektoren (14) eine Höhe (H) zwischen 50 mm und 150 mm aufweist.

6. Anordnung nach einem der Ansprüche 3 bis 5,
**dadurch gekennzeichnet, dass** die Platte (16) jedes der Deflektoren (14) eine im Wesentlichen plane Form aufweist und einen Winkel (α) mit einer zu der Innenseite (11E) der vorderen Klappe (3), an welcher der Deflektor (14) angeordnet ist, orthogonalen Richtung (Y-Y) bildet, wobei der Winkel (α) in einem definierten Winkelbereich zwischen 0° und 5° liegt, derart, dass:
- 0° einer Position entspricht, in der die Platte (16) parallel zu der orthogonalen Richtung (Y-Y) ist; und
- 5° einer Position entspricht, in der die Platte (16) zu der hinteren Stirnkante (11B) der vorderen Klappe (3) hin geneigt ist, wobei sie einen Winkel von 5° mit der orthogonalen Richtung (Y-Y) bildet.

7. Anordnung nach einem der Ansprüche 1 bis 6,
**dadurch gekennzeichnet, dass** jeder der Deflektoren (14) eine Mehrzahl von Befestigungslaschen (21) umfasst, wobei jede der Befestigungslaschen (21) geeignet ist, auf der Innenseite (11E) der vorderen Klappe (3), an welcher der Deflektor (14) angeordnet ist, befestigt zu werden.

8. Anordnung nach einem der Ansprüche 1 bis 7,
**dadurch gekennzeichnet, dass** jeder der Deflektoren (14) an der vorderen Klappe (3) durch mindestens eines der folgenden Befestigungselemente (22) befestigt ist: Niet, Schraube, Bolzen, Klebstoff.

9. Bugfahrwerksgehäuse für ein Flugzeug (AC), das Bugfahrwerksgehäuse (2) umfassend einen Hohlraum (23), der geeignet ist, ein Fahrwerk (5) aufzunehmen, eine Öffnung (10), die zum Durchführen des Fahrwerks (5) ausgestaltet ist, und eine Anordnung von Klappen, die geeignet ist, die Öffnung (10) zu öffnen und zu schließen, um das Ausfahren oder das Einfahren des Fahrwerks (5) zu ermöglichen,
**dadurch gekennzeichnet, dass** die Anordnung von Klappen eine Anordnung (1) nach einem der Ansprüche 1 bis 8 ist.

10. Flugzeug,
**dadurch gekennzeichnet, dass** es ein Bugfahrwerksgehäuse (2) nach Anspruch 9 umfasst.

## Claims

1. Set of doors for a front landing gear bay (2) of an aircraft (AC), said set (1) of doors including two front doors (3) and two rear doors (4) intended to open or to close the front landing gear bay (2) to enable lowering or retraction of a landing gear (5),
**characterized in that** each of said front doors (3) is fitted with at least one deflector (14) arranged on an internal face (11E) of the front door (3) near a rear leading edge (11B) thereof, said deflector (14) extending at least partially along said rear leading edge (11B).

2. Set according to Claim 1,
**characterized in that** each of said deflectors (14) is arranged on the internal face (11E) of the corresponding front door (3) at a distance (D) from its rear leading edge (11B) that is less than 20% of a total length (L0) of said front door (3).

3. Set according to either of Claims 1 and 2, **characterized in that** each of said deflectors (14) includes a plate (16) having a deflector surface (17).

4. Set according to Claim 3,
**characterized in that** the plate (16) of each of said deflectors (14) has a length (L1) between 30% and 50% inclusive of a width (L2) of the front door (3) on which said deflector (14) is arranged.

5. Set according to either one of Claims 3 and 4, **characterized in that** the plate (16) of each of said deflectors (14) has a height (H) between 50 mm and 150 mm inclusive.

6. Set according to any one of Claims 3 to 5, **characterized in that** the plate (16) of each of said deflectors (14) has a substantially plane shape at an angle (α) to a direction (Y-Y) orthogonal to the internal face (11E) of the front door (3) on which said deflector (14) is arranged, said angle (α) being in a defined angular range between 0° and 5° inclusive, such that:
- 0° corresponds to a position in which said plate (16) is parallel to the orthogonal direction (Y-Y); and
- 5° corresponds to a position in which said plate (16) is inclined toward the rear leading edge (11B) of the front door (3) forming an angle of 5° with said orthogonal direction (Y-Y).

7. Set according to any one of Claims 1 to 6, **characterized in that** each of said deflectors (14) includes a plurality of fixing lugs (21), each of said fixing lugs (21) being adapted to be fixed to the internal face (11E) of the front door (3) on which said deflector (14) is arranged.

8. Set according to any one of Claims 1 to 7, **characterized in that** each of said deflectors (14) is fixed to the front door (3) by means of at least one of the following fixing elements (22): rivet, screw, bolt, glue.

9. Front landing gear bay for an aircraft (AC), said front landing gear bay (2) including a cavity (23) adapted to receive a landing gear (5), an opening (10) configured for the passage of said landing gear (5), and a set of doors adapted to open and to close said opening (10) to enable lowering or retraction of said landing gear (5),
**characterized in that** the set of doors is such as the set (1) according to any one of Claims 1 to 8.

10. Aircraft,
**characterized in that** it includes a front landing gear bay (2) according to Claim 9.
